(19) Europäisches Patentamt / European Patent Office / Office européen des brevets

(11) **EP 4 711 815 A1**

(12) **EUROPEAN PATENT APPLICATION**

(43) Date of publication:
18.03.2026  Bulletin 2026/12

(21) Application number: 24200548.6

(22) Date of filing: **16.09.2024**

(51) International Patent Classification (IPC):
**G01S 13/90** *(2006.01)*    **G01S 13/86** *(2006.01)*
**H01Q 21/28** *(2006.01)*

(52) Cooperative Patent Classification (CPC):
**G01S 13/86; G01S 13/904; H01Q 21/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Universität der Bundeswehr München 85577 Neubiberg (DE)**

(72) Inventors:
• **SCHMITT, Michael**
**85646 Anzing (DE)**
• **EITEL, Maximilian**
**81675 München (DE)**
• **RUß, Martin**
**81479 München (DE)**

(74) Representative: **Maiwald GmbH**
**Engineering**
**Elisenhof**
**Elisenstrasse 3**
**80335 München (DE)**

(54) **SINGLE-PASS SAR TOMOGRAPHY ANTENNA ARRANGEMENT**

(57)    The invention relates to an antenna arrangement (100) for SAR single pass tomography, comprising: a first receive antenna system (110) comprising a first support structure (114), a first cantilever (118) mounted at the first support structure (114), an inner receive antenna (112) attached at a first location of the first cantilever (118) and an outer receive antenna (111) attached at a second location different from the first location of the first cantilever (118), the inner receive antenna (112) and the outer receive antenna (111) of the first receive antenna system (110) being configured to receive an SAR signal at the same time, a second receive antenna system (120) comprising a second support structure (124), a second cantilever (128) mounted at the second support structure (124), an inner receive antenna (121) attached at a first location of the second cantilever (128) and an outer receive antenna (122) attached at a second location different from the first location of the second cantilever (128), the inner receive antenna (121) and the outer receive antenna (122) of the second receive antenna system (120) being configured to receive the SAR signal at the same time, a transmit antenna system (130) comprising a transmit antenna (131) configured to transmit the SAR signal; wherein the first receive antenna system (110) and the second receive antenna system (120) are arranged distant from each other, and wherein the first receive antenna system (110) and the second receive antenna system (120) each comprise a single positioning system having a positioning system sensor (116, 126).

Fig. 2

## Description

### TECHNICAL FIELD

The invention relates to an antenna arrangement for single-pass SAR (Synthetic Aperture Radar) tomography, an aircraft, a receive antenna system, a method for generating SAR tomography 3D images, and a use.

### BACKGROUND OF THE INVENTION

Radar interferometry is a technique used in conventional imaging radar systems. It involves assigning a position in the image plane to each point in the imaged area based on its distance from the sensor. This produces a two-dimensional image of the test area. SAR interferometry uses this method. A target area is imaged from two or more different sensor positions. As radar systems are coherent systems, the data contains information about the backscatter intensity and phase. This phase information, or the difference phase between the two images, can be used to create digital elevation models, detect changes in the centimetre range, or detect moving scatterers. Single-Pass SAR-tomography technology makes it possible to create three-dimensional (3D) images of a target area regardless of external light sources and weather conditions, such as night, fog, cloud cover or smoke. Voxels are generated in three-dimensional space (e.g. along axes X, Y, and Z) instead of pixels in a two-dimensional plane (e.g. along axes X and Y). In this context, single-pass means that the target area needs to be sampled, i.e. passed, only once. Moreover, tomography refers to an imaging method which uses sections or sectioning based on penetrating microwaves. The prerequisite for this is the presence of several receiver antennas, spatially separated along a so-called baseline, for the simultaneous but spatially separated reception of the radar signals emitted by a transmitter antenna and reflected by the target scene. Existing single-pass tomography systems are based on relatively short wavelengths (e.g. so-called Ka-band having a wavelength of approximately 0.85 cm) and therefore require a short baseline. However, in cases where a penetration of solid matter to a certain extent is desired, which opens up the possibility of detecting concealed objects such as vehicles in wooded areas or objects hidden in the sand such as mines or IEDs, or an estimation of biomass or glacier thickness, longer wavelengths are required. Such wavelengths are, for example, waves in the S-Band, L-Band, or P-Band. The range of wavelengths used by these bands extends from 10 cm in the S-Band up to 65 cm in the P-Band. For this, it is crucial to determine the exact position and orientation of each receiver antenna at every point in time. There are currently no established solutions for systems in the S-Band, L-Band or P-Band that can operate a single-pass tomography system.

### SUMMARY OF THE INVENTION

There may be a desire to provide an improved antenna arrangement for a single-pass SAR tomography suitable for larger wavelengths.

The problem is solved by the subject-matter of the independent claims. Embodiments are provided by the dependent claims, the following description and the accompanying figures.

The described embodiments similarly pertain to the antenna arrangement for single-pass SAR tomography, the aircraft, the receive antenna system, the method for generating SAR tomography 3D images and the use. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common meaning. If a specific meaning is conveyed to certain terms, definitions of terms will be given in the following in the context of which the terms are used.

The invention aims at providing an antenna arrangement that allows for SAR tomography. SAR tomography requires relative high wavelengths of the radar waves, as tomographic imaging of, for example, forest volumes is not possible with short-wave radar systems. High wavelengths again require relative long base lines. Suitable radar waves are located, for example, in the S-Band, L-Band, or P-Band, that is, in a wavelength range of several centimeters to a few decimeters. This requires that the receive antennas are arranged such that they have a sufficient distance to each other, as tomographic imaging of forest volumes is impossible with short-wave radar systems.

According to a first aspect, an antenna arrangement for an SAR single pass tomography system is provided. The antenna arrangement comprises a first receive antenna system, a second receive antenna system and a transmit antenna system. The first receive antenna system comprises a first support structure, a first cantilever mounted at the first support structure, an inner receive antenna attached at a first location, e.g., at a first end, of the first cantilever and an outer receive antenna attached at a second location different from the first location of the first cantilever, e.g. at a second end of the cantilever. The inner receive antenna and the outer receive antenna of the first receive antenna system are configured to receive an SAR signal at the same time. The second receive antenna system comprises a second support structure, a second cantilever mounted at the second support structure, an inner receive antenna attached at a first location, e.g., at a first end, of the second cantilever and an outer receive antenna attached at a second location different from the first location of the second cantilever, e.g. at a second end of the cantilever. The inner receive antenna and the outer receive antenna of the second receive antenna system are configured to receive an SAR signal at the same time. Preferably, the inner receive antenna and the outer receive antenna of the second receive antenna system are additionally configured to receive an SAR signal at the same time as the inner receive antenna and the outer receive antenna of the first receive antenna system. The transmit antenna system further comprises a transmit antenna configured to transmit the SAR signal. The first receive antenna system and the second receive antenna system are arranged distant from each other, and the orientation of the first and the second cantilevers is such that the inner and the outer receive antennas of the first cantilever and the inner and the outer receive antennas of the second cantilever are in line. Moreover, the first receive antenna system and the second receive antenna system each comprise a single positioning system having a positioning system sensor.

The transmit antenna system may be arranged in between the first receive antenna system and the second receive antenna system. In particular, the transmit antenna may be arranged between the cantilevers.

The design allows the operation of two receiving antennas at one fix element, which is the cantilever, which is again fixed to a support structure. The two antennas, the cantilever and the support structure can be regarded as one antenna system or "module". This means, it can be produced as a single, separate entity, which can be mounted to a carrier independent from the other system components. In this respect, the geometrical relationships of the components of the receive antenna system can be determined before mounting on a carrier. This determination may be based on the construction plans, which allows only small tolerances and/or on calibrations and measurements. The construction may take into account that deformations due to external forces during operation shall not occur, or at least only in an allowable, insignificant range. The cantilever may comprise, for example, a pipe, and may be made, for example, of a metal, carbon fibre or another suitable material. The support structure may be an element by which the cantilever can be mounted at the carrier. In one or more embodiments, the support structure may be hollow and provide space for accommodating electronics, for example, for positioning and communication as described below.

That is, instead of having two support structures - one for each receive antenna - only one support structure is required, at which two receive antennas are mounted. This allows for less weight and less effort for mounting and reduces the calibration effort when mounting to a carrier such as a wing of an aircraft. Further, this has the effect that two receive antennas can be mounted on one side of the carrier, e.g. on one of the wings of the aircraft at all since there may be only one point where a support structure may be mounted at the carrier. Further positive effects are obtained in view of the fact, that for the SAR measurements the position and orientation of the antennas must be known. Since the geometrical relationships can be determined before mounting and thus are known, a single position at any location within the antenna system and only one orientation vector of the system is required to determine the position and orientation of both antennas. This also allows for having only one positioning system (or set of positioning systems that are combined with each other), instead of two. Put otherwise, only one positioning system is needed in order to determine the position and orientation of two receive antennas.

Using the positioning system an exact position and orientation of the associated receive antennas may be determined. For a point of time, the positioning system measures only a single position and orientation for a receive antenna system. The positions and orientation of the SAR receive antennas are then derived from this measured position and orientation. In this way, the equipment for the positioning system only needs to be provided once, even though two antennas are present and the three-dimensional position and orientation vectors of each receive antenna of the antenna system is determined.

It is noted that the expression "two antennas" or "first and second receive antenna systems" does not mean "exactly two" and does therefore not exclude that further antennas are part of the antenna system or that further antenna systems are present in the arrangement. The receive antenna system may thus be extended to more than two antennas that are arranged in one line. In this respect, also the cantilevers may comprise more than two ends or mounting locations for receive antennas, and may be cross shaped, rectangular or have any other geometrical shape. For example, two lines, each comprising four antennas may be formed in parallel by the two receive antenna systems. The antenna system may therefore provide two or more antennas forming an antenna array. However, it may also be possible, for example, to have a second transmit antenna, transmitting SAR signals at different frequencies, where a first line of receive antennas receives signals of a first frequency and a second line uses receive antennas of a second frequency, thereby using the first receive antenna system with a first GNSS/INS system and the second receive antenna system with the second GNSS/INS system. In case of having more than two receive antenna systems, the antennas associated to a respective transmit antenna also lie in one line. It is noted that even two such receive antenna systems, which may for example be arranged at one wing of an aircraft could be considered as a single superordinate antenna system comprising a common positioning system for all antennas of this antenna receive system.

The terms "inner" and "outer" are defined by the fact that all receiving antennas are in line and the antenna of one receiving antenna system that is closest to the centre of this line is referred to as an inner antenna. Accordingly, the antennas that are furthest apart are referred to as "outer" antennas. In case the receive antenna system comprises more than two receive antennas, any further antenna between the inner and outer antenna of an antenna system may be designated as middle antenna.

The pair of receive antennas that have the greatest distance from each other form the overall baseline, which defines the resolution of the SAR tomography image. Using this pair maximizes the resolution. The receive antennas in between these two antennas are used for providing additional samples to enhance the quality of the measurements. Ideally, all receive antennas are arranged such that the distances to their neighbouring antennas are equal. In this way, the maximum distance between any neighbouring antennas is minimized which is beneficial for signal processing. Therefore, the antennas are preferably arranged such that the distances between neighbouring antennas is as equal as possible. Moreover, as the resolution of the tomography images increases with the baseline length, the antennas forming the baseline should be spaced as far apart as possible.

Since the application is SAR single pass tomography, it is clear that the line formed by the receive antennas is perpendicular to a movement of the system, when the system is in operation.

According to an embodiment, the first and the second support structures are arranged centrally at their respective first or second cantilever.

Such a symmetrical mechanical configuration provides the best stability and reduces the calculation efforts.

According to an embodiment, the at least one positioning system sensor is an INS (inertial navigation system) sensor and/or a GNSS (global navigation satellite system) sensor.

The positioning system may thus be a combined INS/GNSS positioning system. The antenna arrangement, in particular the geometric structure of the antennas themselves with respect to each other has defined dimensions known to the system so that by use of the positioning system sensor the relative positions of the antennas are known. This applies also to the phase centres of the antennas, which can be determined beforehand. The relative directions from the sensors to the antennas can be determined, for example, by determining the position vectors between the GNSS antennas as a reference direction, supported by the INS. By means of GNSS, the relative position can be translated into absolute positions. However, the GNSS and INS can also be designed such that the relative and absolute positions of the receive antennas can be determined for each of the receive antenna systems independently, e.g., using patch antennas or phase array antennas, so that the receive antenna systems are self-sufficient regarding the antenna positions.

It is noted that by the "positioning system" positions and orientations are measured or determined. The positioning system may also provide navigation capabilities, which are not required for determining the voxels for the SAR tomography measurements. As known to a person skilled in the art, filters such as a Kalman Filter and methods such as loose, tight, and deep coupling algorithms may be used for the positioning and for the GNSS-INSS integration.

According to an embodiment, the first and the second cantilevers are rigid, to not bend under environmental forces.

The term "rigid" includes torsion rigidity and bending rigidity. A stiff and rigid design ensures a constant lever arm between the phase centre of the antenna and the positioning system sensor. Therefore, the antenna phase centres of the receive antennas are always known precisely.

According to an embodiment, the first support structure is mountable at the bottom side of a right aircraft wing and the second support structure is mountable at the bottom side of a left aircraft wing.

The antenna arrangement may be preferably used for airborne SAR systems such that the antenna arrangement may be mounted to an aircraft, or to be more precise, to the wings and the fuselage of an aircraft. The aircraft can be manned or unmanned. The wings represent the carrier element for the support structures. The entire wingspan of the aircraft, for example, a microlight or ultralight aircraft or a drone, can be utilized to create the largest possible baseline.

According to an embodiment, the first and the second support structures are each pods.

Pods can be mounted at the bottom side of the wings. The aircraft has to provide receptions or fixing structures at which the pods can be mounted. There may be only distinct points at the wings where it is possible to carry such pods. The pods allow an easy installation of the antenna systems at the bottom side of the wings of the aircraft and allow to prepare and calibrate the antenna systems before mounting them at the aircraft. Preferably, each of the pods form a stand-alone system that is mounted under the wings of the aircraft before flight operations. Each of these pods are therefore supporting structures for a respective receive antenna system that also carries or contains the at least one positioning system sensors, i.e., preferably a combined GNSS/INS system. In embodiments, pods may provide the possibility to accommodate the hardware and electronics for evaluating the signals provided by these sensors. Depending on the material of the pods, also the receive antennas may be located inside the pods. The GNSS antennas can also be mounted on the pods, but preferably on the upper side of the wings, so that the satellite signals arrive in sufficient quality.

According to an embodiment, the transmit antenna system is mountable at a bottom side of an aircraft fuselage, in particular equidistant from the inner receive antennas and from the outer receive antennas.

The position of the transmit antenna may be preferably on an axis or a plane where each point of the axis or plane is equidistant to the antenna systems. Deviations can therefore be equalized by geometric calculations. It is noted that if the position of the transmit antenna is known, for example by using a positioning system, the transmit antenna can be located anywhere in the arrangement.

According to an embodiment, the antenna arrangement further comprises at least one electronic device connected to the transmit antenna and/or receive antennas for providing the SAR transmit signals or for providing SAR transmit signals and a position.

One of the one or more electronic devices may be a device for providing the SAR transmit signals. Further, one of the one or more electronic device may be a computing device for receiving and processing signals or data from the receive antenna. In addition, one of the one or more electronic devices may be a positioning device such as a GNSS sensor or an INS sensor.

According to an embodiment, the electronic device is integrated in a belly pod mounted at the bottom side of the aircraft fuselage or inside the aircraft fuselage.

That is, the one or more electronic devices may be co-located with the transmit antenna system or, for example, in case of the device providing the transmit signal, part of the transmit antenna system. Similarly to the receive antenna systems, also the transmit antenna system and the electronics can be integrated into a pod, and an antenna can be mounted to the pod, which in this case is the belly pod directly under the aircraft fuselage. The belly pod is therefore a third support structure. However, the electronic device(s) may alternatively or partly be located at any other part of the aircraft, for example, inside the fuselage.

According to an embodiment, the transmit antenna system comprises a single positioning system having positioning system sensor, e.g. a GNSS sensor and/or an INS sensor. Thus, the transmit antenna system comprises its own positioning system, by which the position and orientation of the transmit antenna with respect to the receive antennas can be determined precisely.

According to an embodiment, the pods are removable.

Since the pods may be removable, they can be removed and used also on other carrier platforms if required. The wings have receptions for the pods such that the geometric relations are clearly defined and do not change when the pods are removed and re-attached. A re-calibration within an antenna system is not necessarily required. If, however, a re-calibration is performed, this can be done in an unmounted state of the pods.

According to an embodiment, each of the receive and transmit antennas is insulated by a radiation-absorbing material to avoid interferences with other parts of the aircraft and to ensure signal integrity.

According to an embodiment, the first receive antenna system, the second receive antenna system, and the transmit antenna system have communication means connectable by coaxial cable for data transmission.

The electronics may further provide interfaces for the power supply and data communication, i.e., to a power source of the aircraft, such as a battery, and to further electronics for storing data and/or processing the data with respect to the SAR tomography. The interfaces may include preferably wired but possibly also wireless data interfaces, according to any known communication protocol, such as, for example Ethernet, Bluetooth, or similar, capable to transmit the amount of data to be transmitted. In order to avoid interferences, a transmission over coaxial cables may be preferred.

Alternatively, one or more GNSS antennas and/or INS sensors are attached directly to the cantilevers and the signals are be transmitted to a receiver or a processing device at a belly pod or even to the inside of the aircraft. The signals may then be pre-processed locally near of the antennas or within the antennas, e.g., active antennas, or sensors to avoid losses and interferences. The pre-processing may include amplification, conditioning, filtering, A/D-conversion, frequency mixing, and other measures known to a skilled person. As known to a skilled person, it has to be ensured that the GNSS satellites are visible to the GNSS antennas. Multipath aspects may have to be considered.

According to a further aspect, an aircraft, preferably an ultralight aircraft, comprising a right aircraft wing, a left aircraft wing, an aircraft fuselage, and an antenna arrangement according to the first aspect is provided. The first support structure is mounted at the bottom side of the right aircraft wing and the second support structure is mounted at the bottom side of the left aircraft wing. The transmit antenna of the transmit antenna system is mounted at the bottom side of the aircraft fuselage, in particular equidistant from the inner receive antennas and from the outer receive antennas.

The use of receiving antennas in the receive antenna system on each side of the aircraft, each of which is equipped with its own positioning system, enables the present invention to be implemented in particular using an ultralight aircraft whose construction does not have the same rigidity as a drone such as a Global-Hawk drone. Due to this lower rigidity, it seems likely that the antennas under one wing will move relative to those under the other wing during a flight. This is all the more true because the ultralight aircraft is also smaller and the antennas must therefore be mounted further out on the wings in order to achieve the same resolution. However, this relative movement can be recorded and taken into account such that it does not lead to errors when creating the 3D images.

The possibility of use on an ultra-light aircraft may also open up additional areas of application for the invention, particularly in the civilian sector, for which larger aircraft are too expensive to purchase and/or operate. Such applications may be, for example, the use in forest fires in order to detect the development of the fire in real time through the smoke and thus be able to fight it in a more targeted manner. It should also be possible to map the tree population of a forest for forestry purposes.

According to a further aspect, there is provided a receive antenna system for an antenna arrangement of the first aspect. The receive antenna system comprises a support structure, a cantilever mounted at the support structure, an inner receive antenna attached at a first location of the cantilever and an outer receive antenna attached at a second location different from the first location of the cantilever. The inner receive antenna and the outer receive antenna are configured to receive an SAR signal at the same time. Moreover, the receive antenna system comprises a single positioning system having a positioning system sensor.

This design allows the operation of two receiving antennas at one fix element, which is the cantilever, which is again fixed to a support structure. The two antennas, the cantilever and the support structure can be regarded as one antenna system or "module". This means, it can be produced as a single, separate entity, which can be mounted to a carrier independent from the other system components. In this respect, the geometrical relationships of the components of the receive antenna system can be determined before mounting on a carrier. This determination may be based on the construction plans, which allows only small tolerances and/or on calibrations and measurements. The construction may take into account that deformations due to external forces during operation shall not occur, or at least only in an allowable, insignificant range. The cantilever may comprise, for example, a pipe, and may be made, for example, of a metal, carbon fibre or another suitable material. The support structure may be an element by which the cantilever can be mounted at the carrier. In one or more embodiments, the support structure may be hollow and provide space for accommodating electronics, for example, for positioning and communication as described below.

That is, instead of having two support structures - one for each receive antenna - only one support structure is required, at which two receive antennas are mounted. This allows for less weight and less effort for mounting and reduces the calibration effort when mounting to a carrier such as a wing of an aircraft. Further, this has the effect that two receive antennas can be mounted on one side of the carrier, e.g. on one of the wings of the aircraft at all since there may be only one point where a support structure may be mounted at the carrier. Further positive effects are obtained in view of the fact, that for the SAR measurements the position and orientation of the antennas must be known. Since the geometrical relationships can be determined before mounting and thus are known, a single position at any location within the antenna system and only one orientation vector of the system is required to determine the position and orientation of both antennas. This also allows for having only one positioning system (or set of positioning systems that are combined with each other), instead of two. Put otherwise, only one positioning system is needed in order to determine the position and orientation of two receive antennas.

Using the positioning system, an exact position and orientation of the associated receive antennas may be determined. For a point of time, the positioning system measures only a single position and orientation for a receive antenna system. The positions and orientation of the SAR receive antennas are then derived from this measured position and orientation. In this way, the equipment for the positioning system only needs to be provided once, even though two antennas are present and the three-dimensional position and orientation vectors of each receive antenna of the antenna system is determined.

In an embodiment of the receive antenna system, the positioning system sensor is an INS sensor and/or a GNSS sensor.

The positioning system may thus be a combined INS/GNSS positioning system. The antenna arrangement, in particular the geometric structure of the antennas themselves with respect to each other has defined dimensions known to the system so that by use of the positioning system sensor the relative positions of the antennas are known. This applies also to the phase centres of the antennas, which can be determined beforehand. The relative directions from the sensors to the antennas can be determined, for example, by determining the position vectors between the GNSS antennas as a reference direction, supported by the INS. By means of GNSS, the relative position can be translated into absolute positions. However, the GNSS and INS can also be designed such that the relative and absolute positions of the receive antennas can be determined for each of the receive antenna systems independently, e.g., using patch antennas or phase array antennas, so that the receive antenna systems are self-sufficient regarding the antenna positions.

In another embodiment of the receive antenna system, the cantilever is rigid, to not bend under environmental forces.

The term "rigid" includes torsion rigidity and bending rigidity. A stiff and rigid design ensures a constant lever arm between the phase centre of the antenna and the positioning system sensor. Therefore, the antenna phase centres of the receive antennas are always known precisely.

According to a further aspect, a method for generating SAR tomography 3D images is provided. In a first step, an SAR tomography antenna arrangement according to the first aspect is provided, e.g. mounted, at an aircraft. In a next step, the aircraft is moved over an area along a pre-defined trajectory. During the movement, the position and orientation of the receive antennas of the first receive antenna system is determined and tracked using the positioning system of the first receive antenna system and the position and orientation of the receive antennas of the second or any further receive antenna system is determined and tracked using the positioning system of the second or further receive antenna system. Also during the movement, SAR signals are transmitted by the transmit antenna, and the SAR signals reflected by an object on earth are received by the receive antennas of the first receive antenna system and the second or further receive antenna system. Preferably, a pair consisting of one of the receive antennas of the first receive antenna system and one of the receive antennas of the second or further receive antenna system forms a baseline. Then, voxels based on the received SAR signals are determined and 3D-images of the area are generated using the voxels.

As discussed above, the resolution is defined, inter alia, by the baseline, i.e., the distance of the antenna pair which has the greatest distance of its antennas, and the wavelength. A minimum desired resolution results therefore in a minimum baseline for a given wavelength.

The processing of the signals and/or data may be performed by electronic devices that may contain analog and digital devices, including power supply, A/D converters, processors, storage devices, logic devices, etc. as known to a person skilled in the art.

According to a further aspect, a use of a single positioning system having a positioning system sensor for determining and/or tracking a position of two receive antennas each configured for single-pass SAR tomography measurements.

Thus, only one positioning system (or set of positioning systems that are combined with each other) is used for determining and/or tracking a position of two receive antennas. As already mentioned above, using the positioning system an exact position and orientation of the associated receive antennas may be determined. For a point of time, the positioning system measures only a single position and orientation for a receive antenna system. The positions and orientation of the SAR receive antennas are then derived from this measured position and orientation. In this way, the equipment for the positioning system only needs to be provided once, even though two antennas are present and the three-dimensional position and orientation vectors of each receive antenna of the antenna system is determined.

In summary, the antenna arrangement according to the invention is designed so that it can be easily mounted on a carrier platform and used directly without extensive adjustments. One GNSS/INS arrangement for two receive antennas saves costs, weight and effort. The cantilever structures being sufficiently rigid prevents deformation during operation. This ensures that the phase centre of the antennas can be precisely measured in relation to the INS system.

## BRIEF DESCRIPTION OF THE DRAWINGS

Fig. 1 shows a block diagram of the antenna arrangement for an SAR system.
Fig. 2 shows a diagram of an aircraft with the antenna arrangement in front view.
Fig. 3 shows a diagram of an aircraft with the antenna arrangement in a top view.
Fig. 4 shows a flow diagram of a method for generating SAR tomography 3D images.
Fig. 5 shows a diagram of the geometries of a SAR tomography system.
Fig. 6 shows a diagram of the resolution over the baseline length.

## DETAILED DESCRIPTION OF THE INVENTION

Corresponding parts are provided with the same reference symbols in all figures.

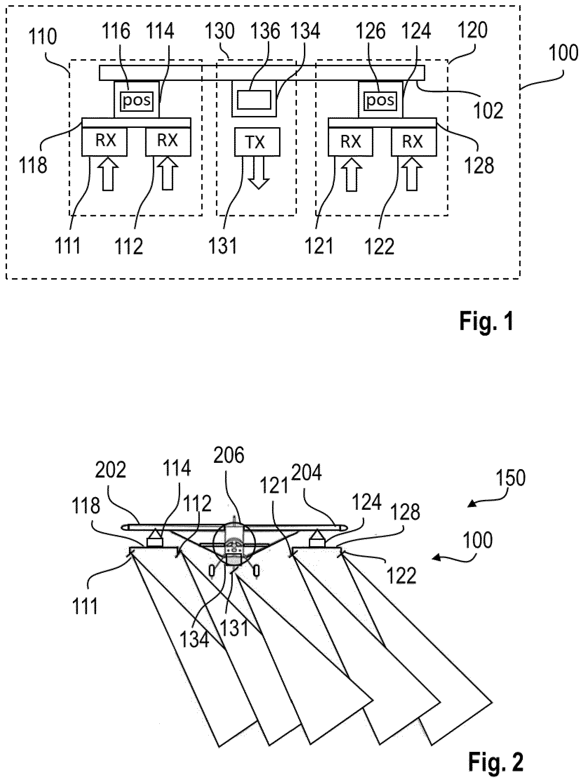

Fig. 1 shows a block diagram of the antenna arrangement 100 for an SAR system. The antenna arrangement 100 in this example comprises a first receive antenna system 110, a second receive antenna system 120, and a transmit antenna system 130. It is noted that the arrangement may comprise more antenna systems and more antennas in one antenna system.

The first receive antenna system 110 comprises a first support structure 114, a first cantilever 118 mounted at the first support structure 114, an inner receive antenna 112 attached at a first end of the first cantilever 118 and an outer receive antenna 111 attached at a second end of the first cantilever 118.

The second receive antenna system 120 comprises a second support structure 124, a second cantilever 128 mounted at the second support structure 124, an inner receive antenna 121 attached at a first end of the second cantilever 128 and an outer receive antenna 122 attached at a second end of the second cantilever 128.

The antenna arrangement 100 further comprises a transmit antenna system 130 with a transmit antenna 131, one or more electronic devices 136, and a third support structure 134 arranged geometrically in between the first and second cantilevers 118, 128.

The first, second, and third support structures 114, 124, 134 are respectively mounted on one side at a carrier platform 102.

Generally spoken, the support structures 114, 124, 134 are containers in which sensors 116, 126 and electronics can be placed. In particular, the first and the second support structures 114, 124 contain sensors 116, 126 of one positioning system such as INS (Inertial Navigation System) sensors or GNSS (Global Navigation Satellite System) sensors.

The third support structure contains electronics to control the measurements, and to evaluate the signals and the data received from the antennas and the positioning systems. It may also comprise communication units to communicate the data to a processor or computer.

Fig. 2 shows an aircraft 150 in a front view.

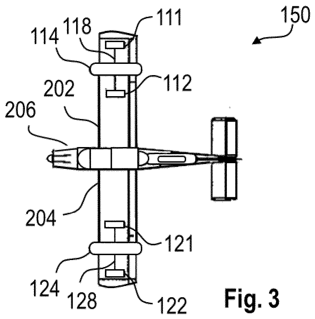

Fig. 3 shows the aircraft 150 in a top view.

The aircraft 150 comprises an antenna structure as depicted in Fig. 1. The aircraft 150 comprises a right aircraft wing 202, a left aircraft wing 204, and an aircraft fuselage 206.

The first support structure 114 is mounted at the bottom side of the left aircraft wing 204 and the second support structure 124 is mounted at the bottom side of the right aircraft wing 202. The aircraft wings 202, 204 represent the carrier platform 102 as described in connection with Fig. 1.

The first and the second support structures 114, 124 are wing pods 114, 124 mounted to the right and left aircraft wings 202, 204.

The first and second support structures 114, 124 each contain at least the positioning sensors 116, 126 and may contain further electronics for the signals received by the antennas 111, 112, 121, 122.

It can be seen that the first and the second support structures 114, 124 are arranged distant from each other, and the orientation of the first and the second cantilevers 118, 128 is such that the inner and the outer receive antennas 112, 111 of the first cantilever 118 and the inner and the outer receive antennas 121, 122 of the second cantilever 128 are in one line, and the inner receive antennas have a smaller distance between each other than the outer receive antennas 111, 122.

In other words, the antennas 111, 112, 121, 122, are placed on an axis through the wings. This axis extends substantially perpendicular to the middle axis, i.e. rotation axis along the aircraft fuselage 206 such that the transmit antenna system is mounted at the bottom side aircraft fuselage equidistant from the inner receive antennas and from the outer receive antennas.

As can be seen from Fig. 2, the antenna arrangement 100 forms a hammerhead-shark configuration. It is noted that the positions and orientations need not to be exact as defined above. In the end, the geometry has to be known which is then taken into account when evaluating the time of flight and the phases of the signals to be measured for the SAR tomography.

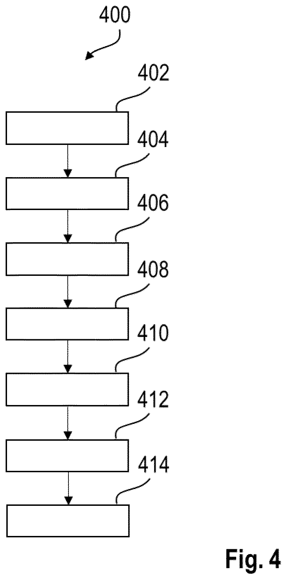

Fig. 4 shows a flow diagram of a method 400 for generating SAR tomography 3D images. The method 400 comprises the following steps:

Providing 402 an antenna arrangement 100 for single-pass SAR tomography (cf. description above) at an aircraft 150.

Moving 404 the aircraft over an area along a predefined trajectory.

Determining and tracking 406 the position and orientation of the receive antennas of the first receive antenna system using a positioning system of the first receive antenna system and the position and orientation of the receive antennas of the second receive antenna system using a positioning system of the second receive antenna system.

Transmitting 408 SAR signals by the transmit antenna.

Receiving 410 the SAR signals reflected by an object on earth by the receive antennas of the first receive antenna system and the second receive antenna system, where a pair of one of the receive antennas of the first receive antenna system and one of the receive antennas of the second receive antenna system may form a baseline.

Determining 412 voxels based on the received SAR signals and the baseline.

Generating 414 3D-images of the area using the voxels.

In more detail, the transmit antenna 131 sends the SAR signal, which is received by the receive antennas 111, 112, 121, 122 after having interacted with the area from which a 3D image is to be generated.

For example, the transmit antenna 131 continuously transmits radar pulses towards the earth's surface, which are reflected there and then received again by the receive antennas 111, 112, 121, 122. When in operation, each point on the surface is usually hit by several successive pulses. Each point therefore also reflects several pulses back to the receive antennas 111, 112, 121, 122, which receive them at different points along its trajectory. These reflected pulses can be used to generate an image similar to that which would theoretically be generated with a single image of a very large antenna, the extent of which corresponds to the distance traveled by the actual antenna during the period between the first and last recorded reflection of a particular point. A virtual antenna is emulated or synthesized, so to speak.

By the method using the antenna arrangement 100, not only two-dimensional but also three-dimensional images of the terrain to be mapped are generated. The generation is independent of external light sources and weather conditions with the aid of an aircraft 150, whereby voxels are generated in three-dimensional space instead of pixels in a two-dimensional plane. Here, everything that is located above the ground, which is also completely impenetrable for the radar, is represented in the form of voxels of different densities, whereby the density of a voxel indicates its transparency with respect to the radar waves and can in turn provide information about the material of which the corresponding volume in space consists.

In order to generate this type of 3D image, the functions of the transmitting and receiving antennas 131, 111, 112, 121, 122 are separated in the structure according to the invention and several receiving antennas 111, 112, 121, 122 are used. Specifically, a transmitting antenna 131 is placed centrally under the fuselage 206 of the aircraft 150 to be used. The receiving antennas 111, 112, 121, 122 are combined in pairs and at least one pair of antennas 111, 112; 121, 122 is suspended under each wing, aligned in such a way that the receiving antennas 111, 112, 121, 122 lie in a line transverse to the direction of flight and thus effectively form an antenna array.

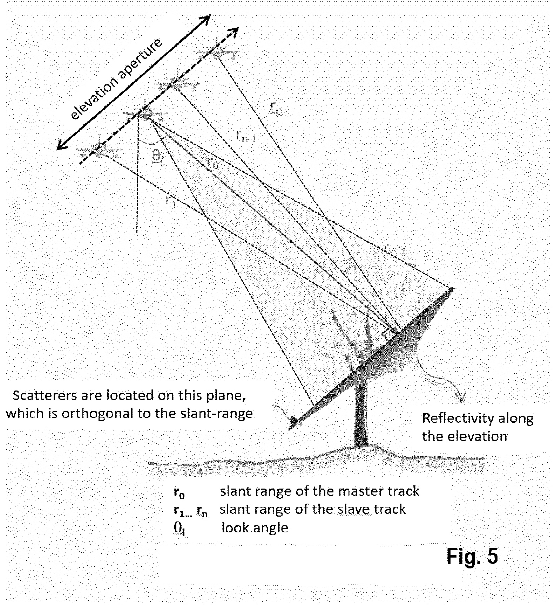

Fig. 5 shows a diagram of the geometries of a SAR tomography system. The resolution $\rho$ in the elevation direction is determined by the formula $\rho = \frac{\lambda \cdot R}{\Delta B}$, where A is the wavelength, $R$ is the slant range (distance between sensor and target point, e.g. $r_0$ in Fig. 5) and $\Delta B$ is the baseline. The slant range $R$ results from the flight altitude h and the off-nadir angle $\theta$ according to

$$R = \frac{h}{\cos(\theta)}$$ . A higher altitude or a larger off-nadir angle lead to a greater distance $R$, which worsens the resolution $\rho$ if the wavelength and baseline remain the same. The elevation direction can be represented as shown in Fig. 5 and can be translated into the vertical resolution. In this context, resolution describes the ability of a sensor to detect two objects that are close to each other as separate signals.

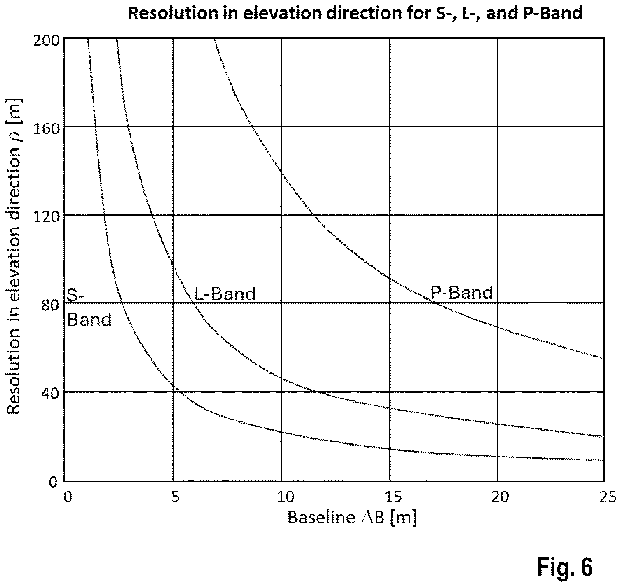

Fig. 6 shows a diagram in which the resolution is plotted as a function of the baseline length for different wavelengths at a height of flight of 1500 m and an off-nadir-angle of 45°. In particular, it can be seen that the baseline for a distinct resolution increases with the wavelength, and that the baseline increases for higher resolutions.

As a preferred baseline, the line between the outer antennas 111 and 122 may be used. However, also other combinations may be used such as the line between antennas 112 and 121 may be used. Due to the relatively large distance between the outer antennas 111, 122, it is possible to achieve a high resolution of the 3D images generated, particularly for the relatively long wavelengths of the so-called S-band (approx. 10 cm), L-Band (approx. 22.5 cm), or P-Band (65 cm). These wavelengths in turn have the advantage that they can also penetrate solid matter to a certain extent. Potential applications are, for example, locating vehicles in wooded areas or objects hidden in the sand, such as mines or IEDs. In the civilian sector, for example, it is possible to map the amount of wood in a forest or the thickness of a glacier.

To ensure that the respective antenna position is known at all times, both the transmitting antenna 131 and each pair of receiving antennas 111, 112; 121, 122 are, in the example shown in the figures, equipped with their own combination of INS and GNSS. The receiving antennas of a pair of antennas 111, 112; 121, 122 are connected to the corresponding navigation system by a braced cantilever construction.

The single-pass tomography system makes it therefore possible to map forests in three dimensions and determine the forest volume in one pass. The system is designed so that it can be easily mounted on a carrier platform 202, 204 and can be used directly without extensive adjustments. It is important that the cantilever structures are sufficiently rigid to prevent deformation during operation. This ensures that the phase center of the antennas can be precisely measured in relation to the INS system.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

## REFERENCE NUMERALS

| | |
|---|---|
| 100 | SAR single pass tomography antenna arrangement |
| 102 | carrier platform |
| 114 | first support structure |
| 124 | second support structure |
| 118 | first cantilever |
| 128 | second cantilever |
| 110 | first receive antenna system |
| 111 | receive antenna of the first receive antenna system, outer receive antenna |
| 112 | receive antenna of the first receive antenna system, inner receive antenna |
| 116 | positioning system sensor(s) of the first receive antenna system |
| 120 | second receive antenna system |
| 121 | receive antenna of the second receive antenna system, inner receive antenna |
| 122 | receive antenna of the second receive antenna system, outer receive antenna |
| 124 | second support structure |
| 126 | positioning system sensor(s) of the second receive antenna system |
| 128 | second cantilever |
| 130 | transmit antenna system |
| 131 | transmit antenna |
| 134 | third support structure; belly pod |
| 136 | electronic device(s) of the transmit system within the belly pod |
| 150 | aircraft |
| 202 | right aircraft wing (carrier platform) |
| 204 | left aircraft wing (carrier platform) |

206        aircraft fuselage
400        method for generating SAR tomography 3D images
402-412        steps of the method 400

**Claims**

1. Antenna arrangement (100) for SAR single pass tomography, comprising:

   a first receive antenna system (110) comprising a first support structure (114), a first cantilever (118) mounted at the first support structure (114), an inner receive antenna (112) attached at a first location of the first cantilever (118) and an outer receive antenna (111) attached at a second location different from the first location of the first cantilever (118), the inner receive antenna (112) and the outer receive antenna (111) of the first receive antenna system (110) being configured to receive an SAR signal at the same time,
   a second receive antenna system (120) comprising a second support structure (124), a second cantilever (128) mounted at the second support structure (124), an inner receive antenna (121) attached at a first location of the second cantilever (128) and an outer receive antenna (122) attached at a second location different from the first location of the second cantilever (128), the inner receive antenna (121) and the outer receive antenna (122) of the second receive antenna system (120) being configured to receive the SAR signal at the same time,
   a transmit antenna system (130) comprising a transmit antenna (131) configured to transmit the SAR signal;
   wherein the first receive antenna system (110) and the second receive antenna system (120) are arranged distant from each other, and the orientation of the first and the second cantilevers (118, 128) is such that the inner and the outer receive antennas (112, 111) of the first cantilever (118) and the inner and the outer receive antennas (121, 122) of the second cantilever (128) are in line, and

   wherein the first receive antenna system (110) and the second receive antenna system (120) each comprise a single positioning system having a positioning system sensor (116, 126).

2. Antenna arrangement (100) according to claim 1, wherein the first and the second support structures (114, 124) are arranged centrally at their respective first or second cantilever (118, 128).

3. Antenna arrangement (100) according to claim 1 or 2, wherein the positioning system sensor (116, 126) is an INS sensor and/or a GNSS sensor.

4. Antenna arrangement (100) according to any one of the previous claims, wherein the first and the second cantilevers (118, 128) are rigid, to not bend under environmental forces.

5. Antenna arrangement (100) according to any one of the previous claims, wherein the first support structure (114) is mountable at a bottom side of an aircraft wing (202) and/or the second support structure (124) is mountable at a bottom side of an aircraft wing (204).

6. Antenna arrangement (100) according to any one of the previous claims, wherein the transmit antenna system (130) is mountable at a bottom side of an aircraft fuselage (206), in particular equidistant from the inner receive antennas (112, 121) and from the outer receive antennas (111, 122).

7. Antenna arrangement (100) according to any one of the previous claims, wherein the transmit antenna system (130) comprises a single positioning system having a positioning system sensor.

8. Antenna arrangement (100) according to any one of the previous claims, wherein each of the receive and transmit antennas (111, 112, 121, 122, 131) are insulated by a radiation-absorbing material configured to avoid interferences with other parts of the aircraft and to ensure signal integrity.

9. Antenna arrangement (100) according to any one of the previous claims, wherein the first receive antenna system (110), the second receive antenna system (120), and the transmit antenna system (130) have communication means connectable by coaxial cable for data transmission.

10. Aircraft (150) comprising a right aircraft wing (202), a left aircraft wing (204), an aircraft fuselage (206), and an antenna arrangement (100) according to any one of the preceding claims, wherein the first support structure (114) is mounted at the bottom side of the right aircraft wing (202) and the second support structure (124) is mounted at the bottom side of the left aircraft wing (204), and wherein the transmit antenna of the transmit antenna system (130) is mounted at the bottom side of the aircraft fuselage (206), in particular equidistant from the inner receive antennas (112, 121) and from the outer receive antennas (111, 122).

11. Receive antenna system (110, 120) for an antenna arrangement (100) of any one of claims 1 to 9, the receive antenna system (110, 120) comprising a support structure (114, 124), a cantilever (118, 128) mounted at the support structure (114, 124), an inner receive antenna (112, 121) attached at a first location of the cantilever (118, 128) and an outer receive antenna (111, 122) attached at a second location different from the first location of the cantilever (118, 128), the inner receive antenna (112, 121) and the outer receive antenna (111, 122) being configured to receive an SAR signal at the same time, and wherein the receive antenna system (110) further comprises a single positioning system having a positioning system sensor (116, 126).

12. Receive antenna system (110, 120) according to claim 11, wherein the positioning system sensor (116, 126) is an INS sensor and/or a GNSS sensor.

13. Receive antenna system (110, 120) according to claim 11 or 12, wherein the cantilever (118, 128) is rigid, to not bend under environmental forces.

14. Method for generating SAR tomography 3D images, comprising:

> providing (402) an antenna arrangement according to any one of claims 1 to 9 at an aircraft (150);
> moving (404) the aircraft over an area along a pre-defined trajectory;
> determining and tracking (406)
>
>> the position and orientation of the receive antennas (111, 112) of the first receive antenna system (110) using the positioning system (116) of the first receive antenna system (110) and
>> the position and orientation of the receive antennas (121, 122) of the second receive antenna system (120) using the positioning system (126) of the second receive antenna system (120).
>
> transmitting (408) SAR signals by the transmit antenna (130);
> receiving (410) the SAR signals reflected by an object on earth by the receive antennas (111, 112, 121, 122) of the first receive antenna system (110) and the second receive antenna system, (120);
> determining (412) voxels based on the received SAR signals; and
> generating (414) 3D images of the area using the voxels.

15. Use of a single positioning system having a positioning system sensor (116, 126) for determining and/or tracking a position of two receive antennas (111, 112; 121, 122) each configured for single-pass SAR to-

mography measurements.

Fig. 1

Fig. 2

Fig. 3

Fig. 4

Fig. 5

$r_0$     slant range of the master track
$r_1 \dots r_n$     slant range of the slave track
$\theta_l$     look angle

Fig. 6

Europäisches Patentamt

European Patent Office

Office européen des brevets

# EUROPEAN SEARCH REPORT

**Application Number**

EP 24 20 0548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG BINGNAN ET AL: "Motion compensation on baseline oscillations for distributed array SAR by combining interferograms and inertial measurement", IET RADAR SONAR NAVIGATION, THE INSTITUTION OF ENGINEERING AND TECHNOLOGY, UK, vol. 11, no. 8, 1 August 2017 (2017-08-01), pages 1285-1291, XP006062471, ISSN: 1751-8784, DOI: 10.1049/IET-RSN.2016.0572 * the whole document * | 1-15 | INV. G01S13/90 G01S13/86 H01Q21/28 |
| A | WO 2023/102621 A1 (RADAZ IND E COMERCIO DE PRODUTOS ELETRONICOS LTDA [BR]) 15 June 2023 (2023-06-15) * figures 3, 5, 7 * | 1-15 | |
| A | BAQUE REMI ET AL: "SETHI and RAMSES-NG flexible multi-spectral airborne remote sensing research platforms", 2016 CIE INTERNATIONAL CONFERENCE ON RADAR (RADAR), IEEE, 10 October 2016 (2016-10-10), pages 1-5, XP033161706, DOI: 10.1109/RADAR.2016.8059303 [retrieved on 2017-10-04] * the whole document * | 1-15 | |

TECHNICAL FIELDS SEARCHED (IPC)

H01Q
G01S

-/--

The present search report has been drawn up for all claims

| Place of search | Date of completion of the search | Examiner |
|---|---|---|
| Munich | 6 February 2025 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 20 0548

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIAO ZEKUN ET AL: "Urban 3D imaging using airborne TomoSAR: Contextual information-based approach in the statistical way", ISPRS JOURNAL OF PHOTOGRAMMETRY AND REMOTE SENSING, AMSTERDAM [U.A.] : ELSEVIER, AMSTERDAM, NL, vol. 170, 28 October 2020 (2020-10-28), pages 127-141, XP086353062, ISSN: 0924-2716, DOI: 10.1016/J.ISPRSJPRS.2020.10.013 [retrieved on 2020-10-28] * figures 1,2a, 3 * ----- | 1-15 | |

TECHNICAL FIELDS
SEARCHED     (IPC)

The present search report has been drawn up for all claims

| Place of search | Date of completion of the search | Examiner |
|---|---|---|
| Munich | 6 February 2025 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0548

This annex lists the patent family members relating to the patent documents cited in  the above-mentioned European search report.
The members are as contained in the European Patent Office EDP file on
The European Patent Office is in no way liable for these particulars which are merely given for the purpose of information.

06-02-2025

| Patent document cited in search report | Publication date | Patent family member(s) | Publication date |
|---|---|---|---|
| WO 2023102621 A1 | 15-06-2023 | NONE | |

For more details about this annex : see Official Journal of the European Patent Office, No. 12/82